Europäisches Patentamt

European Patent Office

Office européen des brevets

(19)

(11) **EP 1 107 019 A1**

(12) # DEMANDE DE BREVET EUROPEEN

(43) Date de publication:
**13.06.2001 Bulletin 2001/24**

(51) Int Cl.⁷: **G01S 13/42**, G01S 13/87,
H01Q 25/00, H01Q 3/26,
H01Q 3/04

(21) Numéro de dépôt: **00403377.5**

(22) Date de dépôt: **01.12.2000**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **10.12.1999 FR 9915624**

(71) Demandeur: **THOMSON-CSF
75008 Paris (FR)**

(72) Inventeurs:
• **Quellec, Jean-Michel
94117 Arcueil Cedex (FR)**
• **Marchalot, Gabriel
94117 Arcueil Cedex (FR)**

(74) Mandataire: **Lucas, Laurent Jacques
Thomson-CSF
Propriété Intellectuelle
13, avenue du Président S. Allende
94117 Arcueil Cedex (FR)**

(54) **Procédé d'exploration en gisement d'un radar et radar mettant en oeuvre le procédé**

(57) Le domaine de l'invention est celui des procédés d'exploration rapide en gisement d'une antenne radar de surveillance et des radars mettant en oeuvre un tel procédé.

Le procédé consiste à entraîner (1) en rotation lente une antenne comprenant deux antennes élémentaires à balayage électronique installées dos-à-dos, à commander (2) simultanément le pointage électronique de chaque antenne élémentaire à balayage électronique, à commuter (3) le signal hyperfréquence alternativement entre les deux antennes élémentaires et à initialiser (4), avant chaque tour du faisceau radar, le pointage électronique de chaque antenne élémentaire à balayage électronique à un angle déterminé $\theta_i$.

Le radar comprend une antenne comprenant deux antennes élémentaires à balayage électronique et un calculateur de pointage.

Application en particulier à un radar de patrouille maritime.

# FIG.1

ENTRAINER L'ANTENNE EN ROTATION — 1

COMMANDER LE POINTAGE ÉLECTRONIQUE DES ANTENNES ÉLÉMENTAIRES — 2

COMMUTER ALTERNATIVEMENT LE SIGNAL HYPERFRÉQUENCE — 3

INITIALISER LA COMMANDE DE DÉPOINTAGE À UN ANGLE $\theta$ — 4

EP 1 107 019 A1

**Description**

L'invention se rapporte aux procédés d'exploration rapide, d'une antenne radar de surveillance, sur 360° de gisement. L'invention se rapporte, en outre, aux radars de surveillance mettant en oeuvre un procédé d'exploration rapide sur 360° de gisement.

L'invention s'applique, notamment, à un radar de patrouille maritime ou à un radar de détection d'hélicoptère.

Certaines missions de surveillance sur 360° exigent une vitesse d'exploration en gisement rapide, afin d'obtenir plusieurs mesures sur la cible pendant le temps de détection. Cette exigence s'explique en particulier pour les raisons suivantes :

- d'une part, la cible peut avoir des mouvements de rotation sur elle-même ; en particulier si la cible consiste, en des pales d'un hélicoptère, en un périscope d'un sous-marin ou bien en un mât d'un navire. Lors de sa rotation, la cible présente une surface variable vis-à-vis d'un radar ; cette surface est communément désignée par les sigles SER, abréviation des termes Surface Equivalente Radar. Or, pour obtenir une couverture radar sur 360°, la solution consiste à faire tourner le faisceau de l'antenne radar. Etant donné le type de cible, plus le faisceau de l'antenne radar tourne vite, plus la probabilité augmente que le faisceau de l'antenne radar soit dirigé vers la cible lorsque celle-ci présente une SER forte.
- d'autre part, la cible peut être noyée dans un fouillis ayant un temps de corrélation moins important que celui de la cible ; par exemple, lorsque le fouillis est dû à la mer. La séparation de la cible du fouillis peut être possible en effectuant plusieurs mesures pendant le temps de détection.

Pour effectuer une exploration rapide avec une antenne radar sur 360° de gisement, la solution consiste à faire tourner rapidement le faisceau de l'antenne radar. Pour effectuer la rotation rapide du faisceau de l'antenne radar, les techniques connues ont évolué depuis les techniques à base d'asservissement jusqu'aux techniques à balayage électronique.

Les techniques à base d'asservissement consistent à effectuer la rotation mécanique de l'antenne radar au moyen de systèmes d'asservissement. Les évolutions apportées aux systèmes d'asservissement permettent d'atteindre des vitesses de rotation élevées. Le radar de surveillance maritime, qui fait l'objet de l'article de J.CRONEY et A.WORONCOW « Radar polarization comparisons in sea-clutter suppression by decorrelation and constant false alarm rate receivers », publié dans « The Radio and Electronic Engineer », Vol.38, N°4, October 1969, présente une telle performance de vitesse de rotation. Le radar en cause comprend deux antennes de même ouverture angulaire montées dos-à-dos. Les antennes ont des polarisations croisées ;

verticale pour l'une, horizontale pour l'autre. La puissance radar est commutée à chaque demi-révolution, d'une antenne à l'autre, de telle manière que l'image p.p.i soit partagée en deux parties de 180°. L'image de la première partie est répétée sur la deuxième partie, avec une polarisation orthogonale, pour choisir la polarisation, et donc l'antenne, la mieux adaptée en fonction du bruit de mer. Les antennes sont protégées par un radôme de forme aérodynamique ; la vitesse de rotation de l'antenne pouvant aller jusqu'à 600t/min.

De telles performances de vitesse nécessitent des systèmes d'asservissement puissants et complexes. Ces systèmes ont pour inconvénients de diminuer la fiabilité, d'être encombrants et lourds, et généralement onéreux.

L'évolution des techniques du radar conduit aux techniques mettant en oeuvre un balayage électronique. Le balayage électronique est utilisé, par exemple, sur certains radars de pointe avant pour des avions de combat. Mais les antennes à balayage électronique ne permettent pas actuellement de couvrir 360°.

Un des objectifs de l'invention est d'assurer une exploration rapide sur 360° de gisement avec une antenne radar sans les inconvénients des techniques à base d'asservissement rappelés ci-dessus.

A cet effet, l'invention a pour objet un procédé d'exploration rapide sur 360° de gisement d'une antenne radar comprenant, deux antennes élémentaires à balayage électronique, installées dos-à-dos, pouvant être dépointées électroniquement d'un angle maximum $\pm \alpha_d$, consistant :

- à entraîner l'antenne en rotation à une vitesse $w_1$,
- à commander simultanément le pointage électronique de chaque antenne élémentaire à balayage électronique pour que le balayage du faisceau radar de l'antenne s'effectue à une vitesse $w_2$ sur un tour, $w_2$ vérifiant la relation :

$$w_2 = w_1 \times \frac{2\pi}{2\left(\dfrac{\pi}{2} - \alpha_d\right)}$$

- à commuter le signal hyperfréquence émis, alternativement entre les deux antennes élémentaires à balayage électronique, à une cadence déterminée,
- à initialiser, avant chaque tour i du faisceau radar, le pointage électronique de chaque antenne élémentaire à balayage électronique à un angle déterminé $\theta_i$.

La cadence de commutation est fonction de la récurrence des émissions du radar, de la vitesse de rotation mécanique, de l'ouverture du pinceau de chaque antenne et de l'angle de dépointage maximum $\alpha_d$. Pour

obtenir un éclairement régulier en gisement pour chaque antenne élémentaire, la période de commutation est inférieure au temps d'éclairement d'un but.

Un premier mode de réalisation préférentiel est caractérisé par une cadence de commutation identique à la fréquence des émissions radar.

Un deuxième mode de réalisation est caractérisé par une cadence de commutation variable en fonction de la direction de pointage.

Un troisième mode de réalisation est caractérisé par l'association de la commande de commutation avec une commande de polarisation ; à chaque émission radar correspond une polarisation déterminée.

Le procédé permet avantageusement de faire tourner le faisceau radar à une vitesse supérieure à la vitesse de rotation mécanique de l'antenne.

En fonction des modes de réalisation du procédé, celui-ci permet avantageusement d'adapter la cadence de commutation en fonction de la direction de pointage et de choisir le type de polarisation à chaque émission radar.

Dans un mode particulier de réalisation, le procédé permet d'avoir une vitesse de rotation du faisceau radar variable tout en ayant une vitesse de rotation mécanique constante.

L'invention a en outre pour objet un radar mettant en oeuvre le procédé. Le radar comprend une antenne, un système d'asservissement, un calculateur de pointage et un moyen de commutation.

Le système d'asservissement entraîne l'antenne en rotation lente à une vitesse w1.

L'antenne comprend deux antennes élémentaires à balayage électronique montées dos-à-dos, pouvant être dépointées d'un angle maximum $\pm \alpha_d$.

Le calculateur de pointage commande simultanément le pointage électronique de chaque antenne élémentaire à balayage électronique, pour que le balayage du faisceau radar de l'antenne s'effectue à une vitesse $w_2$ sur un tour, $w_2$ vérifiant la relation :

$$w_2 = w_1 \times \frac{2\pi}{2(\frac{\pi}{2} - \alpha_d)}$$

et pour initialiser, avant chaque tour i du faisceau radar de l'antenne, le pointage électronique de chaque antenne élémentaire à balayage électronique à un angle déterminé $\theta_i$.

Le moyen de commutation commute, alternativement entre les deux antennes élémentaires à balayage électronique, le signal hyperfréquence. Le moyen de commutation comprend typiquement un commutateur hyperfréquence piloté par une commande de commutation. La commande de commutation est fonction de la récurrence des émissions du radar, de la vitesse de rotation mécanique et de l'ouverture du pinceau de chaque antenne. Le relais commute le signal hyperfréquence d'émission sur une des antennes élémentaires à balayage électronique.

Dans un premier mode de réalisation particulier, l'antenne comprend deux réseaux réflecteurs.

Dans un deuxième mode de réalisation particulier, l'antenne comprend deux antennes actives.

Le radar a pour avantage de ne pas nécessiter de système d'asservissement complexe et coûteux.

D'autres caractéristiques et avantages apparaîtront à l'aide de la description qui suit. La description est faite en regard des figures annexées qui représentent :

- la figure 1, le procédé selon l'invention sous la forme d'un organigramme,
- la figure 2, le pointage électronique à un instant $t_o$,
- la figure 3, le pointage électronique à un instant t = $t_o$ + Tf/2,
- la figure 4, le pointage électronique à un instant t = $t_o$ + Tf,
- la figure 5, le pointage électronique après initialisation,
- la figure 6, le décalage d'origine de tours successifs,
- la figure 7, un mode de réalisation d'un radar selon l'invention.

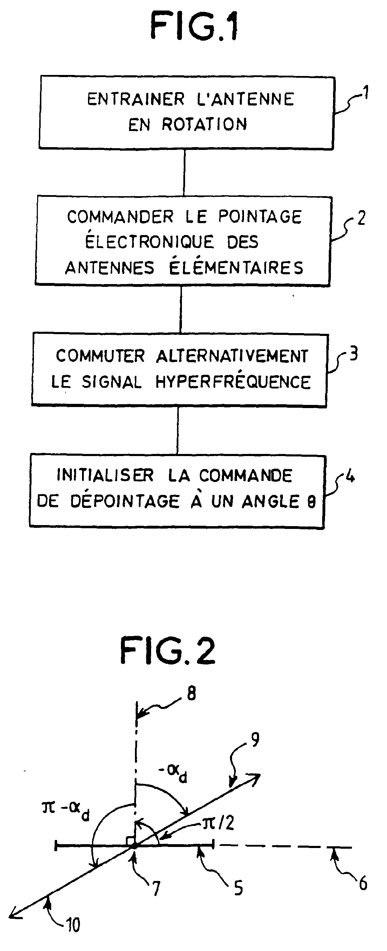

Le procédé selon l'invention est représenté à la figure 1 sous la forme d'un organigramme.

Le procédé assure une exploration rapide sur 360° de gisement d'une antenne radar; l'antenne radar comprenant deux antennes élémentaires à balayage électronique installées dos-à-dos. Chaque antenne élémentaire à balayage électronique peut être dépointée électroniquement d'un angle relatif maximum $\pm \alpha_d$.

Le procédé consiste à entraîner 1 l'antenne en rotation lente à une vitesse $w_1$. La vitesse $w_1$ est typiquement constante. Dans un cas particulier de mise en oeuvre du procédé, la vitesse $w_1$ est égale à 30 t/min.

Tout en commandant la rotation mécanique, le procédé commande 2 le pointage électronique de chaque antenne élémentaire à balayage électronique pour que le faisceau radar présente une vitesse angulaire $w_2$ liée à la vitesse $w_1$ par la relation :

$$(1) \qquad \frac{w_2}{w_1} = \frac{2\pi}{2\left(\frac{\pi}{2} - \alpha_d\right)}$$

La commande de pointage électronique de chaque antenne élémentaire à balayage électronique pointe le faisceau d'une antenne élémentaire à balayage électronique suivant un angle relatif qui évolue entre les angles maximums de dépointage. C'est-à-dire, entre l'angle $-\alpha_d$ et l'angle $+ \alpha_d$ pour la première antenne élémentaire à balayage électronique et, entre l'angle $\pi - \alpha_d$ et l'angle $\pi + \alpha_d$ pour la deuxième antenne élémentaire à balayage électronique ; la référence angulaire correspondant à la normale à la première antenne élémentaire à balayage électronique.

Tout en commandant le pointage électronique de chaque antenne élémentaire à balayage électronique, le procédé commute 3, alternativement entre les deux antennes élémentaires à balayage électronique, le signal hyperfréquence. La cadence de commutation est fonction de la récurrence des émissions du radar, de la vitesse de rotation mécanique et de l'ouverture du pinceau de chaque antenne. Pour obtenir un éclairement régulier en gisement pour chaque antenne élémentaire, la période de commutation est inférieure au temps d'éclairement d'une cible.

Un premier mode de réalisation préférentiel est caractérisé par une cadence de commutation identique à la fréquence des émissions radar.

Un deuxième mode de réalisation est caractérisé par une cadence de commutation multiple de la récurrence des émissions radar.

Une variante au procédé consiste à associer à chaque commutation un choix de polarisation d'antenne ; à chaque émission radar correspond une polarisation déterminée, verticale ou horizontale.

La relation (1) traduit le fait que, lorsque l'antenne effectue une rotation de

$$2\left(\frac{\pi}{2} - \alpha_d\right),$$

le faisceau radar balaie $2\pi$ soit 360° de gisement.

Après que le faisceau a balayé 360° de gisement, le procédé initialise 4 le pointage électronique de chaque antenne élémentaire à balayage électronique à un angle absolu déterminé $\theta$ avant de commencer une nouvelle exploration.

La figure 2 illustre le pointage électronique à un instant $t_0 = 0$ pris comme origine des temps. L'antenne 5 est vue de dessus, elle est alignée avec un axe de référence mécanique 6 pris comme axe de référence angulaire absolu. L'antenne 5 peut tourner autour d'un axe de rotation 7. La référence angulaire 8 relative est la normale à une des antennes élémentaires à balayage électronique de l'antenne 5, la première antenne élémentaire à balayage électronique par exemple. A chaque antenne élémentaire à balayage électronique correspond un faisceau. A l'instant $t_0 = 0$, la première antenne élémentaire à balayage électronique a un faisceau 9 dépointé initialement de l'angle relatif -ad, la deuxième antenne élémentaire à balayage électronique a un faisceau 10 dépointé initialement de l'angle relatif $\pi - \alpha_d$.

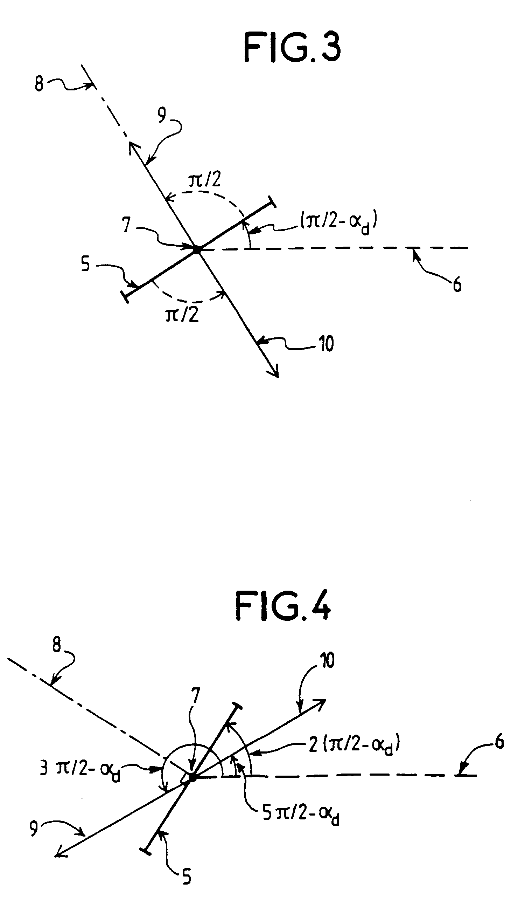

La figure 3 illustre le pointage électronique à un instant $t = t_0 + Tf/2$ ; Tf étant le temps nécessaire pour que le faisceau de l'antenne balaie $\pi$, soit 180° de gisement. Entre $t_0$ et $t_0 + Tf/2$, le faisceau 9,10 de chaque antenne élémentaire à balayage électronique balaie la moitié du balayage effectué par le faisceau de l'antenne 5, soit $\pi/2$. Simultanément au pointage électronique, l'antenne 5 tourne d'un angle égal à $\pi/2 - \alpha_d$. Le rapport entre l'angle de balayage du faisceau et l'angle de rotation de l'antenne vaut :

$$\frac{\pi}{\left(\frac{\pi}{2} - \alpha_d\right)},$$

ce qui correspond au rapport entre les vitesses $w_2$ et $w_1$ donné par la relation (1).

La figure 4 illustre le pointage électronique à un instant $t = t_0 + Tf$.

Entre les instants $t_0 + Tf/2$ et $t_0 + Tf$, le faisceau 9,10 de chaque antenne élémentaire à balayage électronique balaie une zone équivalente à celle balayée entre les instants $t_0$ et $t_0 + Tf/2$, soit une zone d'angle $\pi/2$.

Entre les instants $t_0$ et $t_0 + Tf$, le faisceau 9 de la première antenne élémentaire à balayage électronique balaie une zone comprise entre les angles absolus $\pi/2 - \alpha_d$ et $3\pi/2 - \alpha_d$ et le faisceau 10 de la deuxième antenne élémentaire à balayage électronique balaie une zone comprise entre les angles absolus $3\pi/2 - \alpha_d$ et $5\pi/2 - \alpha_d$. Simultanément au pointage électronique, l'antenne 5 tourne autour de son axe de rotation 7 d'un angle égal à $2(\pi/2 - \alpha_d)$. Pendant la durée Tf, le faisceau radar de l'antenne balaie $2\pi$ ; en effet le faisceau de chaque antenne élémentaire à balayage électronique balaie $\pi$. A l'instant $t_0 + Tf$, l'antenne radar a exploré 360° d'azimut.

A l'instant $t_0 + Tf$, l'antenne radar est décalée d'un angle absolu $2(\pi/2 - \alpha_d)$.

Avant d'entreprendre le tour de balayage suivant, le procédé consiste à initialiser le pointage électronique de chaque antenne élémentaire à balayage électronique à un angle absolu déterminé $\theta$. La valeur de l'angle $\theta$ est déterminée à partir du nombre de tours déjà effectués, de la relation (1) et du fait qu'avant d'entreprendre un tour, le faisceau de chaque antenne élémentaire à balayage électronique est dépointé de la valeur de dépointage maximum.

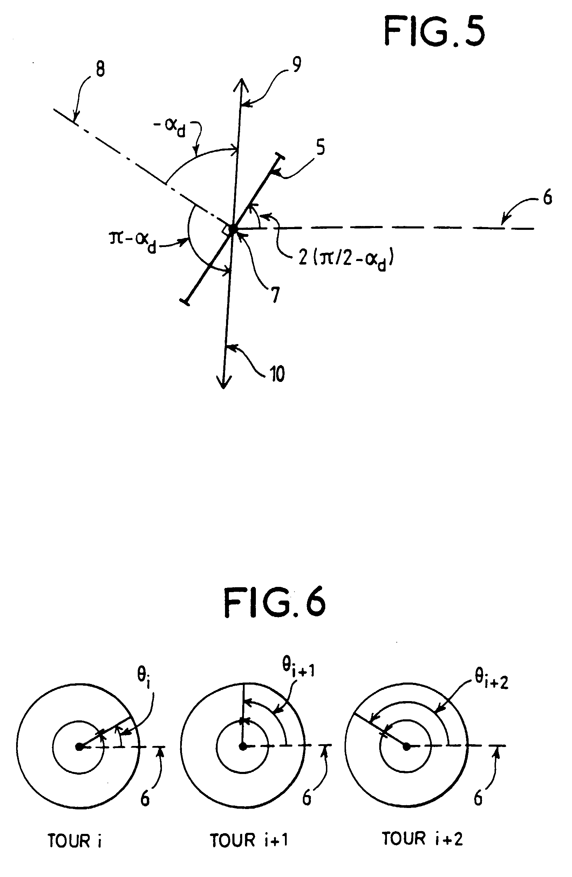

La figure 5 illustre le pointage électronique de chaque antenne élémentaire à balayage électronique après l'initialisation effectuée à l'issue du 1er tour.

Le faisceau 9 de la première antenne élémentaire à balayage électronique est dépointé d'un angle relatif égal à - $\alpha_d$. Le faisceau 10 de la deuxième antenne élémentaire à balayage électronique est dépointé d'un angle relatif égal à $\pi - \alpha_d$.

Après la phase d'initialisation, l'exploration rapide sur 360° de gisement s'effectue de manière similaire à celle décrite en regard des figures 3 et 4.

L'antenne 5 tourne autour de son axe de rotation 7 à une vitesse $w_1$. Simultanément à la rotation de l'antenne 5, la commande de pointage électronique pointe le faisceau de chaque antenne élémentaire à balayage électronique à un angle fonction du temps. Le pointage relatif de chaque faisceau évolue entre les angles de dépointage maximum d'une antenne élémentaire à balayage électronique.

Entre les instants $t_o$ et $t_o$ + Tf, avec $t_o$ = Tf, le faisceau 9 de la première antenne élémentaire à balayage électronique pointe entre les angles relatifs - $\alpha_d$ et + $\alpha_d$, soit entre les angles absolus 3 ($\pi/2 - \alpha_d$), et $5\pi/2 - 3\alpha_d$ car l'antenne 5 tourne d'un angle $\pi/2 - \alpha_d$ entre les instants $t_o$ et $t_o$ + Tf.

Entre les instants $t_o$ et $t_o$ + Tf, avec $t_o$ = Tf, le faisceau 10 de la deuxième antenne élémentaire à balayage électronique pointe entre les angles relatifs $\pi - \alpha_d$ et $\pi + \alpha_d$, soit entre les angles absolus $5\pi/2 - 3\alpha_d$ et $7\pi/2 - 3\alpha_d$, car l'antenne 5 tourne d'un angle $\pi/2 - \alpha_d$ entre les instants $t_o$ et $t_o$ + Tf. Chaque faisceau d'une antenne élémentaire à balayage électronique balaie une zone d'angle $\pi$ entre les instants $t_o$ et $t_o$ + Tf ; le faisceau radar de l'antenne balaie $2\pi$.

A l'instant $t_o$ + Tf, avec $t_o$ = Tf, l'antenne radar est décalée d'un angle $2(\pi/2 - \alpha_d)$ par rapport à sa position à l'instant $t_o$.

Le décalage absolu de l'antenne radar à l'instant $t_o$ + Tf, avec $t_o$ = Tf, est égal à $4(\pi/2 - \alpha_d)$.

Avant d'entreprendre le tour de balayage suivant, le procédé consiste à initialiser le pointage électronique de chaque antenne élémentaire à balayage électronique à un angle déterminé θ, comme décrit ci-dessus.

La figure 6 représente le décalage d'origine de tours successifs ; le tour i s'effectue avec une origine du tour égale à $\theta_i$.

Quand i = 1, l'origine du tour i est égale à $\theta_1 = \pi/2 - \alpha_d$ suivant l'axe de référence mécanique 6 pris comme axe de référence angulaire absolu.

L'origine du tour i + 1 est égale à $\theta_2 = 3 (\pi/2 - \alpha_d)$

L'origine du tour i + 2 est égale à $\theta_3 = 5 (\pi/2 - \alpha_d)$.

L'origine du tour j est égale à $(j-1) \times 2 (\pi/2 - \alpha_d) + (\pi/2 - \alpha_d)$.

Le décalage d'origine des tours successifs peut être facilement compensable au moyen d'une mémoire tampon pour mémoriser l'ensemble ou une partie des données correspondant à un tour et recaler les images radar.

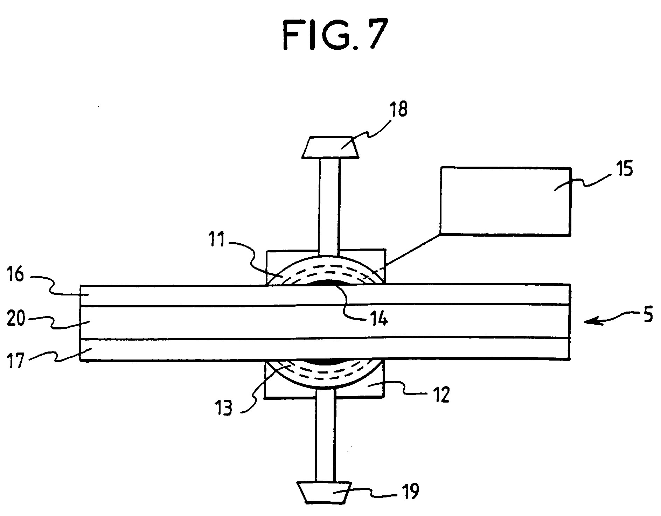

Un premier mode de réalisation d'un radar pour la mise en oeuvre du procédé selon l'invention est schématisé par la figure 7.

Le radar comprend un plateau 11, une antenne 5, un système d'asservissement du plateau 12, un joint tournant 13, un commutateur 14 et un calculateur de pointage 15.

Le plateau 11 peut tourner sur 360° en gisement. Il est entraîné en rotation à une vitesse $w_1$ au moyen du système d'asservissement 12.

L'antenne 5 comprend une première 16 et une seconde 17 antennes élémentaires à balayage électronique.

Le premier mode de réalisation du radar est caractérisé par la réalisation particulière de la première 16 et de la seconde 17 antennes élémentaires à balayage électronique; chaque antenne élémentaire correspond à un réseau réflecteur auquel est associé une source d'émission 18, 19.

Un deuxième mode de réalisation du radar est caractérisé par une antenne formée de deux antennes actives.

L'antenne 5 comprend en outre un circuit de commande 20.

Les deux réseaux réflecteurs sont installés dos à dos. Chaque réseau réflecteur peut être dépointé électroniquement d'un angle maximum ad, dans le sens horaire et dans le sens anti-horaire par rapport à la normale de chaque réseau réflecteur. Chaque source d'émission 18, 19 est installée en face d'un réseau réflecteur 16, 17. Le commutateur 14 commute le signal hyperfréquence sur la première 18 ou sur la seconde 19 source d'émission. Le circuit de commande 20 est connecté, d'une part au premier réseau réflecteur 16 et, d'autre part, au second 17 réseau réflecteur. Il commande séquentiellement les diodes des cellules de déphasage du premier réseau réflecteur 16 et les diodes des cellules de déphasage du second réseau réflecteur 1 7.

Le plateau 11 porte l'antenne 5 qui tourne avec le plateau 11.

Le joint tournant 13 assure la transmission des différents signaux hyperfréquences (émission, réception) entre le plateau 11 et un duplexeur (non représenté). Il assure en outre la liaison de commande numérique entre le plateau 11 et le calculateur de pointage 15.

Le calculateur de pointage 15 commande le pointage électronique de chaque réseau réflecteur 16, 17. La commande de pointage est telle que le balayage du faisceau radar s'effectue à une vitesse $w_2$ sur un tour, w2 vérifiant la relation (1). Avant chaque tour i du faisceau radar, le calculateur de pointage 15 initialise le pointage électronique de chaque réseau réflecteur 16, 17 à un angle $\theta_i$ déterminé comme décrit en regard de la figure 6.

Suivant une réalisation particulière du premier mode, chaque réseau réflecteur peut avoir une polarisation horizontale ou verticale, la source associée étant de même polarisation.

Lorsque les deux réseaux réflecteurs sont de polarisation croisée, l'antenne permet une agilité de polarisation. Le premier réseau réflecteur a une polarisation horizontale, ainsi que la source d'émission associée, et le deuxième réseau réflecteur a une polarisation verticale, ainsi que la source d'émission associée.

Une variante aux modes de réalisation du radar comprend un moyen associé au commutateur. Ce moyen permet de déterminer la polarisation de chaque antenne élémentaire à balayage électronique. L'association avec le commutateur permet de déterminer à chaque commutation la polarisation de l'antenne élémentaire à balayage électronique.

## Revendications

1. Procédé d'exploration rapide sur 360° de gisement d'une antenne radar comprenant deux antennes élémentaires à balayage électronique, installées dos-à-dos, pouvant être dépointées électroniquement d'un angle maximum ± ad, caractérisé en ce qu'il consiste :

   - à entraîner (1) l'antenne (5) en rotation à une vitesse $w_1$,
   - à commander (2) simultanément le pointage électronique de chaque antenne élémentaire à balayage électronique (16, 17) pour que le balayage du faisceau radar de l'antenne (5) s'effectue à une vitesse $w_2$ sur un tour, $w_2$ vérifiant la relation :

$$w_2 = w_1 \times \frac{2\pi}{2\left(\frac{\pi}{2} - \alpha_d\right)}$$

   - à commuter (3) le signal hyperfréquence émis, alternativement entre les deux antennes élémentaires à balayage électronique, à une cadence déterminée,
   - à initialiser (4), avant chaque tour i du faisceau radar, le pointage électronique de chaque antenne élémentaire à balayage électronique (15, 16) à un angle déterminé $\theta_i$.

2. Procédé d'exploration rapide sur 360° de gisement d'une antenne radar selon la revendication 1, caractérisé en ce qu'il consiste à déterminer l'angle $\theta_i$ par la relation :

$$\theta_i = (i - 1) \times 2(\frac{\pi}{2} - \alpha_d) + (\frac{\pi}{2} - \alpha_d)$$

3. Procédé d'exploration rapide sur 360° de gisement d'une antenne radar selon l'une quelconque des revendications 1 et 2, caractérisé en ce qu'il consiste à commuter le signal hyperfréquence émis à une période inférieure au temps d'éclairement d'un but.

4. Procédé d'exploration rapide sur 360° de gisement d'une antenne radar selon l'une quelconque des revendications 1, 2 et 3, caractérisé en ce qu'il consiste à commuter le signal hyperfréquence émis à une cadence égale à la récurrence des émissions radar.

5. Procédé d'exploration rapide sur 360° de gisement d'une antenne radar selon la revendication 3, caractérisé en ce qu'il consiste à commuter le signal hyperfréquence émis à une cadence multiple de la récurrence des émissions radar.

6. Procédé d'exploration rapide sur 360° de gisement d'une antenne radar selon l'une quelconque des revendications 1 et 2, caractérisé en ce qu'il consiste à commuter le signal hyperfréquence émis à une cadence fonction de l'angle de pointage.

7. Radar pour la mise en oeuvre du procédé selon l'une des revendications précédentes comprenant une antenne (5), un système d'asservissement (12) qui entraîne l'antenne en rotation, caractérisé en ce que :

   - le système d'asservissement (12) entraîne (1) l'antenne (5) en rotation à une vitesse w1,
   - l'antenne (5) comprend deux antennes élémentaires à balayage électronique (16, 17) montées dos-à-dos, pouvant être dépointées d'un angle maximum ± $\alpha_d$,

   et en ce qu'il comprend :

   - un calculateur de pointage (15) pour commander (2) simultanément le pointage électronique de chaque antenne élémentaire à balayage électronique (16, 17) pour que le balayage du faisceau radar de l'antenne (5) s'effectue à une vitesse $w_2$ sur un tour, $w_2$ vérifiant la relation :

$$w_2 = w_1 \times \frac{2\pi}{2(\frac{\pi}{2} - \alpha_d)}$$

   et pour initialiser (3), avant chaque tour i du faisceau radar de l'antenne (5), le pointage électronique de chaque antenne élémentaire à balayage électronique (16, 17) à un angle déterminé $\theta_i$,
   - un commutateur (14) pour commuter (3) le signal hyperfréquence émis, alternativement entre les deux antennes élémentaires à balayage électronique (16,17), à une cadence déterminée.

8. Radar selon la revendication 7, caractérisé en ce que les antennes élémentaires à balayage électronique (16, 17) ont une même polarisation.

9. Radar selon la revendication 7, caractérisé en ce que les antennes élémentaires à balayage électronique (16, 17) ont une polarisation différente l'une de l'autre.

10. Radar selon l'une quelconque des revendications 8 et 9, caractérisé en ce que les antennes élémentaires à balayage électronique (16, 17) consistent en des réseaux réflecteurs.

11. Radar selon l'une quelconque des revendications 8 et 9, caractérisé en ce que les antennes élémentaires à balayage électronique (16, 17) consistent en des antennes actives.

# FIG.1

ENTRAINER L'ANTENNE
EN ROTATION — 1

COMMANDER LE POINTAGE
ÉLECTRONIQUE DES
ANTENNES ÉLÉMENTAIRES — 2

COMMUTER ALTERNATIVEMENT
LE SIGNAL HYPERFRÉQUENCE — 3

INITIALISER LA COMMANDE
DE DÉPOINTAGE À UN ANGLE θ — 4

# FIG.2

# FIG.3

# FIG.4

# FIG.5

# FIG.6

θ_i    TOUR i

θ_{i+1}    TOUR i+1

θ_{i+2}    TOUR i+2

# FIG.7

## RAPPORT DE RECHERCHE EUROPEENNE

**Office européen des brevets**

Numéro de la demande

EP 00 40 3377

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 3 648 284 A (DAX PETER R ET AL) 7 mars 1972 (1972-03-07) * abrégé * * colonne 1, ligne 66 - colonne 2, ligne 57 * * figure 3 * | 1,7 | G01S13/42 G01S13/87 H01Q25/00 H01Q3/26 H01Q3/04 |
| A | US 5 841 391 A (KIKUTA DANIEL ET AL) 24 novembre 1998 (1998-11-24) * abrégé * * colonne 2, ligne 6 - ligne 63 * | 1,7 | |
| A | BUCKLER L: "DUAL-USE AIR TRAFFIC CONTROL RADAR" IEEE NATIONAL RADAR CONFERENCE,US,NEW YORK, NY: IEEE, 11 mai 1998 (1998-05-11), pages 26-31, XP000846895 ISBN: 0-7803-4493-6 * abrégé * * page 28 - page 30 * | 1,7 | |
| A,D | CRONEY J ET AL: "Radar polarization comparisons in sea-clutter suppression by decorrelation and constant false alarm rate receivers" RADIO AND ELECTRONIC ENGINEER, OCT. 1969, UK, vol. 38, no. 4, pages 187-198, XP000938469 ISSN: 0033-7722 * abrégé * | 1,7 | DOMAINES TECHNIQUES RECHERCHES (Int.Cl.7) G01S H01Q |

Le présent rapport a été établi pour toutes les revendications

| Lieu de la recherche | Date d'achèvement de la recherche | Examinateur |
|---|---|---|
| LA HAYE | 2 avril 2001 | Roost, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 00 40 3377

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2001

| Document brevet cité au rapport de recherche | Date de publication | Membre(s) de la famille de brevet(s) | Date de publication |
|---|---|---|---|
| US 3648284 A | 07-03-1972 | AUCUN | |
| US 5841391 A | 24-11-1998 | AU 7565698 A | 30-12-1998 |
|  |  | EP 0988562 A | 29-03-2000 |
|  |  | WO 9857193 A | 17-12-1998 |

EPO FORM P0460

Pour tout renseignement concernant cette annexe : voir Journal Officiel de l'Office européen des brevets, No.12/82